# EUROPÄISCHE PATENTSCHRIFT

(11) **EP 1 559 664 B1**
(45) Veröffentlichungstag und Bekanntmachung des Hinweises auf die Patenterteilung: **20.06.2007**
(21) Anmeldenummer: 04015059.1
(22) Anmeldetag: 26.06.2004
(51) Int. Cl.: B65G 17/00, B65G 35/06

(54) **Vorrichtung zum Fördern von Stückgut**
Device for conveying articles
Dispositif pour convoyer des articles

(30) Priorität: 27.06.2003 DE 10329156
(43) Veröffentlichungstag der Anmeldung: 03.08.2005
(73) Patentinhaber: Wolf Verwaltungs GmbH & Co. KG, 85290 Geisenfeld (DE)
(72) Erfinder: Schmidt, Wolfgang, Dr., 94315 Straubing (DE); Klein, Siegfired, 85290 Geisenfeld (DE); Richsfeld, Viktor, 84048 Mainburg (DE)
(74) Vertreter: Meyer, Thorsten

(56) Entgegenhaltungen:
- EP-A- 0 337 891
- GB-A- 1 042 168
- US-A- 5 495 933
- US-A- 5 735 384
- US-A1- 2001 025 767

## Beschreibung

Die Erfindung betrifft eine Vorrichtung nach dem Oberbegriff des Anspruches 1.

Fördervorrichtungen der gattungsgemäßen Art, die auch als Stauförderer bezeichnet werden, werden vor allem dort eingesetzt, wo Bauteile bzw. Werkstücke in einem Fertigungsprozess in eine Maschine, einen Roboter oder einen Arbeitsablauf allgemein eingeführt werden und die Bauteile angehalten bzw. gestaut werden müssen.

Die Bauteile werden von Bauteilträgern transportiert, die mit der Förderkettenanordnung kontinuierlich in Umlauf gesetzt werden. Die Bauteilträger werden an bestimmen Stellen des Umlaufes, insbesondere dort, wo der Förderer mit den Teilen beladen oder entladen wird, mit Hilfe von Vereinzelungsvorrichtungen, z.B. Stoppern, exakt gesteuert angehalten, um zu verhindern, dass die über den Transportförderer laufend angelieferten Bauteilträger mit den darauf festgelegten Bauteilen aneinander stoßen oder deren Abgabe behindern.

Stauförderer weisen eine Rahmenkonstruktion mit Metall-, insbes. Alu-Profilen auf, die Führungen für die Rollenkettenanordnung besitzen, auf der die Bauteilträger aufgesetzt und mitgenommen werden. Mit einer Stopper- oder Vereinzelungsvorrichtung werden die auf einem Bauteilträger zu befördernden Bauteile an einer exakt festzulegenden Position, z.B. einer Belade- oder Entladestelle, z.B. mit Hilfe entsprechender Programmsteuerungen bereit gestellt und z.B. durch Roboter übernommen. Die Einheiten, die die Stopper- oder Vereinzelungsvorrichtungen aufnehmen, werden z.B. durch pneumatische Antriebszylinder in die jeweiligen Halte- oder Durchlaufpositionen der Bauteilträger gebracht und dort positioniert. Den Vereinzelungs- bzw. Stoppervorrichtungen sind Initiatoren zugeordnet, die feststellen, ob ein Bauteilträger an der entsprechenden Stoppervorrichtung vorhanden ist, ob ein Bauteilträger den Stopper verlassen hat, ob ein Bauteilträger nach dem Bestücken bzw. nach dem Entladen vorbei gelaufen ist, usw. Die von den Initiatoren generierten Signale melden der Stoppervorrichtung, ob der bestückte bzw. entladene Bauteilträger bereits weiter bewegt worden ist und damit Platz für den nachfolgenden Bauteilträger freigegeben hat. Um zu verhindern, dass ein Bauteilträger, der angehalten worden ist, wieder nach hinten geschoben werden kann, sind Anti-Rückkehrvorrichtungen vorgesehen. Lichtschranken oder entsprechende Sensoren werden eingesetzt, um festzustellen, ob ein Bauteil auf dem Bauteilträger vorhanden ist.

Während bei horizontalem Verlauf der Werkstückträger auf der umlaufenden Fördervorrichtung ein geringer Bedarf an Zugkraft besteht, da nur die Reibungsverluste zu kompensieren sind, ergibt sich bei der Umlenkung bzw. beim Übergang vom oberen zum unteren Trum der Fördervorrichtung eine um ein Vielfaches höhere Beanspruchung, die durch die Veränderung der Schwerpunkthöhe und das dadurch entstehende höhere, auf die Fördervorrichtung einwirkende Moment bedingt ist, insbesondere, wenn die Werkstücke stehend transportiert werden.

Aus der US-A 5,495,933 ist eine Ketten-angetriebene Palette bekannt geworden, bei der an einem Umlenkpunkt von einer geradlinigen zu einer gekrümmten Förderrichtung eine Umlenkplatte zum Einsatz kommt, bei der der Einlauf von zwei Nocken in Ausnehmungen in der Umlenkplatte entsprechend der Stellung der Umlenkplatte zur Palette mittels eines Stoppers gesteuert wird.

Die US-A 5 735 384 zeigt eine Transporteinrichtung mit reibschlüssige Förderung im horizontalen Bereich und eine formschlüssige Mitnahme in einem Umlenkbereich. Jedoch liegt hier nur ein formschlüssiger Eingriff beim Werkstückträger durch eine Mitnahmescheibe in der Mitte des Werkstückträgers vor. Es wird ein Ritzel konstruktionsbedingt gesperrt ein ruckartiger Betrieb mit Zwangskräften unter Gleitreibung und damit verbundenem Verschleiß ist die Folge.

Die EP 0 337 891 A1 zeigt eine Transporteinrichtung mit einer Umlenkung in einem gekrümmten Bereich, bei der ein Wagen in einer halbkreisförmigen Führung geführt ist, bei der in eine an ihrem Umfang gummierte Scheibe an dem Wagen ausgebildete Zacken hineingepresst werden.

Aufgabe der Erfindung ist, die an den Umlenkstellen des Förderers beim Übergang von Linear- in Drehbewegung entstehenden hohen Beanspruchungen sicher und stoßfrei aufzunehmen und das Einführen der Mitnehmer an den Werkstückträgern in die Mitnahmevorrichtung einwandfrei zu gestalten, indem der Übergang von Reibschluss auf Formschluss, und der Einlauf der Führung für die Bauteilträger in die Mitnahmescheibe ruckfrei eingesteuert wird, um einen möglichst geringen Verschleiß sicher zu stellen.

Gemäß der Erfindung wird dies mit den Merkmalen des Kennzeichens des Anspruches 1 erreicht. Weitere Ausgestaltungen der Erfindung sind Gegenstand der Unteransprüche.

Der Reibschluss-Antrieb ist als Lamellenbremse ausgeführt, die auf der durchgehenden Antriebswelle mit Kettenrädern für die Bauteilträger angeordnet, in einem Gehäuse gekapselt und in Öl laufend ausgeführt ist. Daraus ergeben sich wesentliche Vorteile in Hinblick auf das Verhältnis von Gleit- zu Haftreibung, ein geringer Verschleiß, Wartungsfreiheit über die gesamte Lebensdauer und eine Reduzierung von durch Reibung erregten Schwingungen.

Durch den Formschluss-Antrieb in Form eines Mitnehmerrades nach der Erfindung im Bereich der Umlenkung der Förderkette ergibt sich eine besonders einfache, kosten günstige und robuste konstruktive Ausführung der Beförderung der Werkstückträger. Dabei ist ein zwangloser und stoßfreier Übergang der Rollenanordnung, die den Werkstückträger mit der Förderkette verbindet, in die dafür vorgesehenen Ausnehmungen, z.B. in Form von Zahnlücken zwischen jeweils zwei Zähnen der Mitnahmescheibe entscheidend, der dadurch erreicht wird, dass die Umfangsgeschwindigkeit der Kettenritzel einerseits und die Umfangsgeschwindigkeit der Mitnahmescheibe, die beide gleich groß sind oder in festem Verhältnis zueinander ausgelegt sind, ferner die Position der entsprechenden Ausnehmung der Mitnahmescheibe in Relation zur Entfernung der Rollenanordnung des Werkzeugträgers, und damit die Phasenlage beider festgestellt wird und eine Steuereinrichtung die jeweilige Rolle der Rollenanordnung der Ausnehmung der Mitnahmescheibe zuordnet, so dass die Rolle stoßfrei in die Lücke einlaufen kann.

Der Stopper ist im Prinzip ein Anschlag, der den Werkzeugträger oder die den Werkzeugträger aufnehmende Achse beaufschlagt. Die Betätigung des/der Stopper erfolgt vorzugsweise über Antriebszylinder, die mechanisch, pneumatisch, hydraulisch oder auch elektrisch arbeiten. Die Position des Zylinders wird z.B. über Initiatoren gesteuert, die Signale an die Steuereinrichtung geben, damit der Bauteilträger punktgenau angehalten wird.

Stopper sind vorzugsweise an Stellen längs der Fördervorrichtung vorgesehen, an denen ein Bestücken und Entladen der Werkzeugträger erforderlich ist, um einen möglichen Stau oder eine Kollision zu verhindern bzw. der Werkstückträger an einer definierten Stelle zum Stehen kommt, damit der Roboter punktgenau auf das Werkstück zugreifen kann. Die Initiatoren prüfen hierbei, ob z.B. ein Werkstückträger den Beladestopper verlassen hat, bevor ein weiterer Werkstückträger zugeführt wird.

Nachstehend wird anhand der Zeichnungen eine Ausführungsform der Erfindung dargestellt. Die Figuren zeigen:
- Fig. 1: eine Gesamtprinzipdarstellung einer Ausführungsform der erfindungsgemäßen Fördervorrichtung mit Mitnahmescheiben und Werkstückträgern in Ansicht von der Seite,
- Fig. 2: eine Prinzipansicht der erfindungsgemäßen Fördervorrichtung im Schnitt und in vergrößerter Teilansicht,

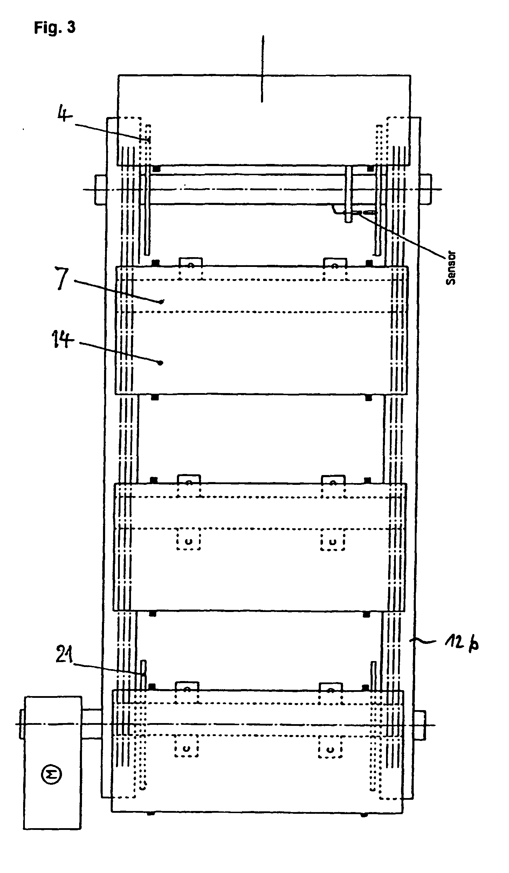

- Fig. 3: eine Aufsicht auf die Darstellung nach Fig. 1,
- Fig. 4: eine Prinzipdarstellung der erfindungsgemäßen Fördervorrichtung mit Stoppern und Initiatoren in Ansicht von der Seite,
- Fig. 5: eine Prinzipdarstellung der erfindungsgemäßen Fördervorrichtung mit Spannvorrichtung,

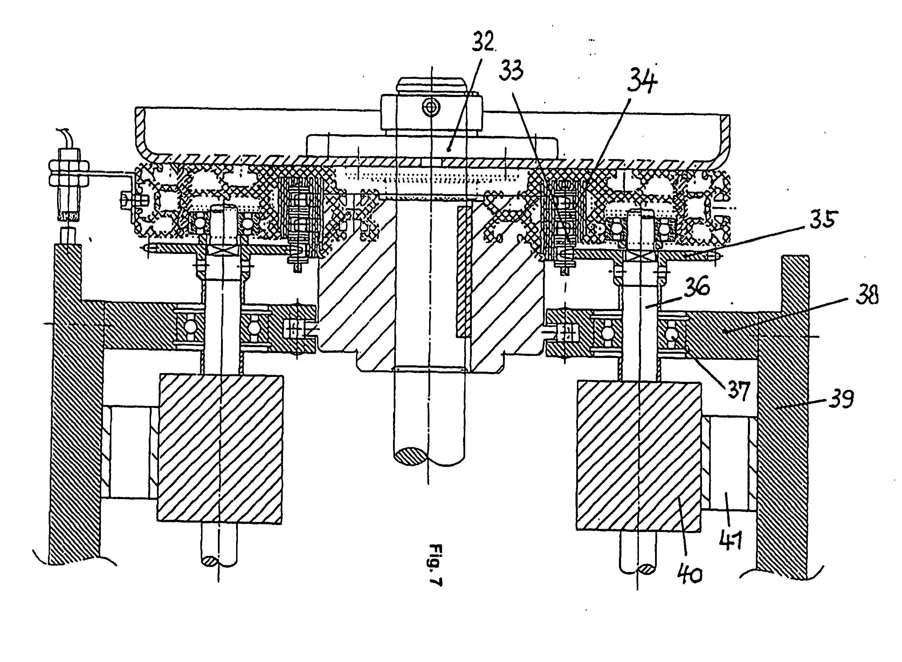

- Fig. 6: eine weitere Ausführungsform der Erfindung mit Abtriebsritzel, Verzahnungsvorrichtung und Kettenrad, in seitlicher Ansicht,
- Fig. 7: eine Schnittdarstellung der erfindungsgemäßen Fördervorrichtung mit Verkettungsvorrichtung in Schnittdarstellung und vergrößerter Ansicht,

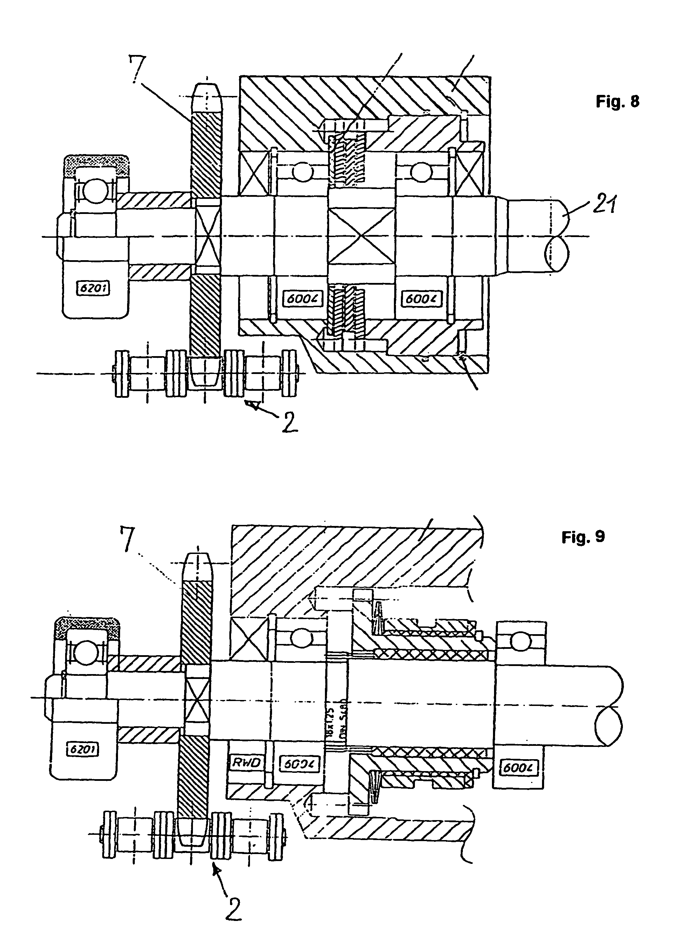

- Fig. 8: eine Ausführungsform einer Lamellenbremse in Schnittansicht,
- Fig. 9: eine Ausführungsform einer Klauenkupplung in Schnittansicht, und

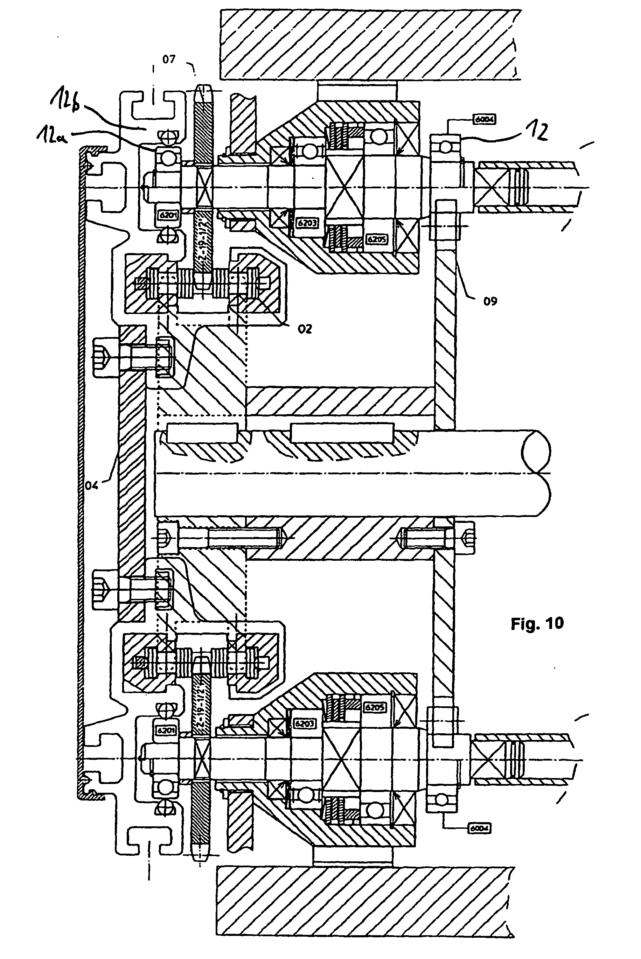

- Fig. 10: die Darstellung einer abgeänderten Ausführungsform einer Lamellenbremse in Verbindung mit Fördervorrichtung und Werkzeugträger.

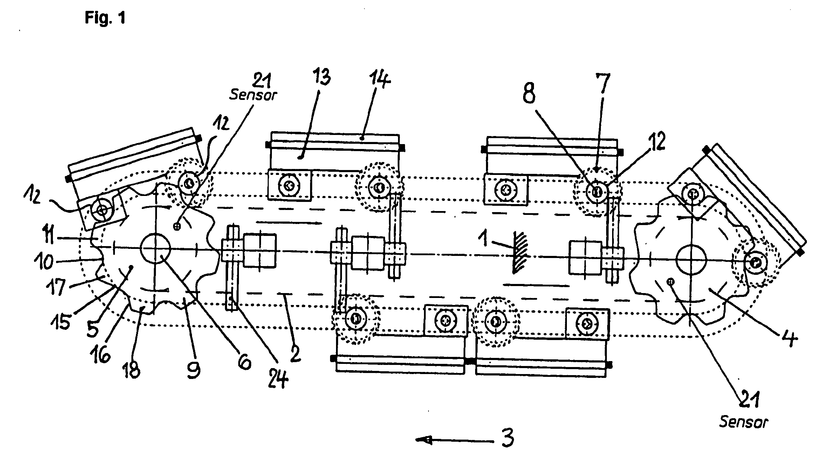

Fig. 1 zeigt eine in Form einer Triplexkette ausgebildete Förderkette 2, die in Laufrichtung 3 über ein Ketten-Umlenkrad 4 und ein Ketten-Antriebsrad 5 bewegt wird. Die Antriebswelle des Antriebs ist mit 6 bezeichnet. Durch die Förderkette 2 wird ein Abtriebsritzel 7 angetrieben, das auf einer gemeinsamen Achse 8 Führungsrollen 12 aufnimmt. Auf der Antriebswelle 6 des Kettenantriebsrades 5 ist koaxial eine Mitnahmescheibe 9 mit in Umfangsrichtung ausgebildeten Zähnen 11 angeordnet, die die Führungsrollen 12 in einer Mulde zwischen jeweils zwei Zahnflanken aufnehmen und damit den auf den Führungsrollen 12 angeordneten Werkstückträger 13 mit Werkstück 14 weiter transportieren.

Beim Übergang des Werkstückträgers 13 aus der horizontalen Bewegung in die teilkreisförmige Umlenkbewegung, d.h. beim Übergang von Reibschluss in Formschluss tritt eine Differenzgeschwindigkeit aufgrund der geänderten Umfangsgeschwindigkeit in der Bewegung der Führungsrollen auf, so dass ein gezieltes Einsteuern der vorlaufenden Zahnflanke erforderlich ist, um ein ruckfreies Einführen der Führungsrolle 12 in die zugeordnete Mulde 10 der Mitnahmescheibe 9 zu erzielen. Dies wird dadurch unterstützt, dass die vorlaufende Zahnflanke 15 flacher ausgebildet ist als die nachlaufende Zahnflanke 16, die ihre normale Form beibehalten kann, so dass das Einlaufen der Führungsrolle in die Zahnmulde ruckfrei und kontinuierlich erfolgt. Dies ist schematisch in der Ausführung des KettenAntriebsrades 5 in Fig. 1 anhand von zwei benachbart gegenüberliegenden Zähnen 17, 18 des Antriebsrades 5 dargestellt, bei denen die vorlaufende Zahnflanke 15 flacher bzw. weniger steil ausgeführt ist als die nachlaufende Zahnflanke 16.

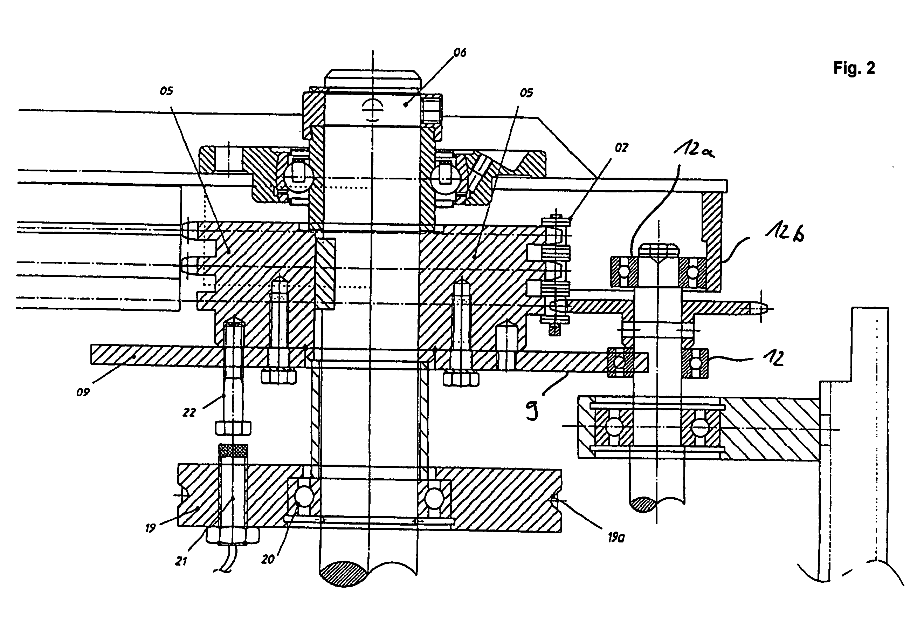

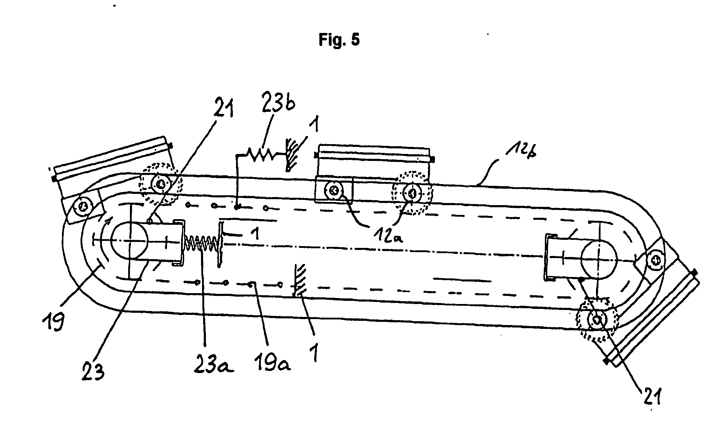

Auf der Antriebswelle 6 sitzt, wie Fig. 2 zeigt, das Kettenrad 5 für die Förderkette 2 drehfest mit der Mitnahmescheibe 9, die eine auf der Antriebswelle 6 über Lager 20 drehbar angeordnete Sensorscheibe 19 mit zugeordnetem Sensor 21 aufweist. Der Sensor 21 ist auf einen Markiergegenstand 22 auf der Mitnahmescheibe 9 ausgerichtet und mißt die Winkelposition. Das Ketten-Umlenkrad 4 ist nach Fig. 5 über eine Spannvorrichtung 23 in der Förderrichtung des Kettenförderers verstellbar ausgebildet. Die Spannvorrichtung 23 verschiebt das Ketten-Umlenkrad und bewirkt ferner ein Spannen der Förderkette, wenn die Förderkette aufgrund des im Betrieb auftretenden Verschleißes eine Kettenlängung und einen größeren Achsabstand durch Nachspannen erfordert. Auf dem Umfang der Sensorscheibe 19 ist gleitungsfrei in einer Umfangsnut laufend ein Seil 19a angeordnet. Das eine Seilende dieses Seiles ist mit dem Rahmengestell 1 fest verbunden, das andere Seilende federnd gegengehalten.

Bei Änderung des Abstandes zwischen der Achse des Umlenkrades 4 und dem letzten Stopper vor dem Einlauf bewirkt das Seil 19a eine entsprechende Verdrehung der Sensorscheibe 19. Bei Veränderung des Abstandes zwischen Stopper und Umlenkung wird dabei durch Phasenverschiebung des die Deaktivierung des Stoppers auslösenden Signals ein exakter Eintritt des Werkstückträgers mit seinen Führungselementen in die Mitnahmescheibe 9 sicher gestellt.

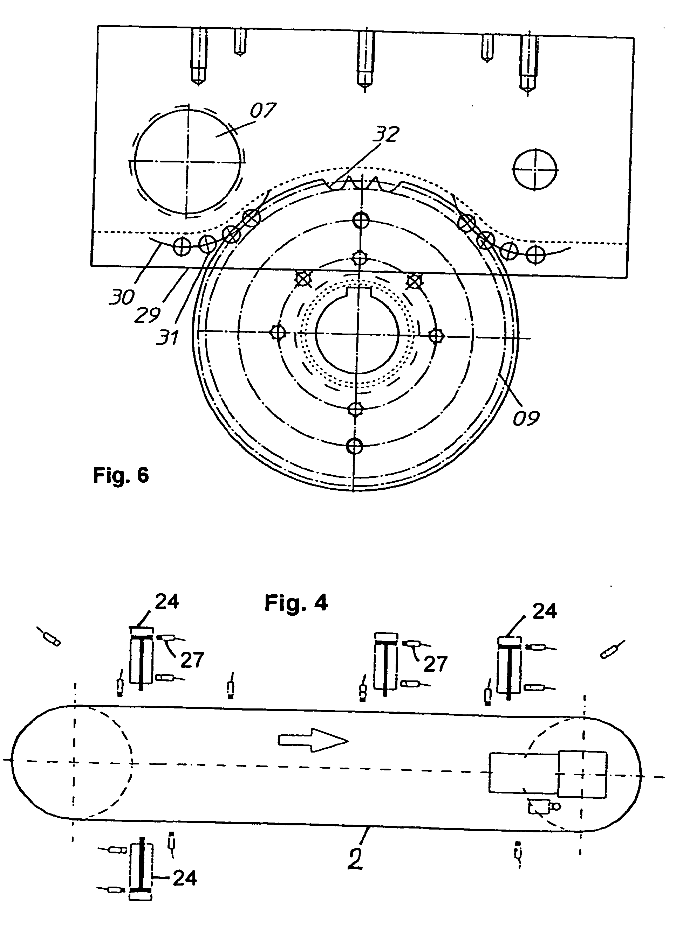

Wie in Fig. 4 dargestellt, sind an entsprechenden Stellen längs der Fördervorrichtung, an denen ein Bestücken, Entladen und Rücklaufen der Werkstückträger erforderlich ist, Stopper 24 vorgesehen, die als Anschläge 25 ausgebildet sind und die durch Antriebszylinder 26 aktiviert werden. Die Stopper 24 sind an festen Stellen entlang der Fördervorrichtung 2 angeordnet und ihre Antriebszylinder 26 werden über Initiatoren 27 gesteuert, die Signale an die Steuer- und Antriebsvorrichtung für die Fördervorrichtung 2 generieren und ein punktgenaues Stoppen der Werkzeugträger ergeben. Lichtschranken 28 prüfen, ob der Werkstückträger beladen ist.

### Bezugszeichenliste

1 Rahmengestell
2 Förderkette (Triplex-Kette)
3 Laufrichtung
4 Ketten-Umlenkrad
5 Ketten-Antriebsrad
6 Antriebswelle
7 Abtriebsritzel
8 Achse
9 Mitnahmescheibe
10 Aussparungen
11 Zähne
12 Führungsrollen
12a Umlauf-Führungsrollen
12b Umlaufschiene
13 Werkstückträger
14 Werkstück
15, 16 Zahnflanken
17, 18 Zähne
19 Sensorscheibe
19a Seil
20 Lager
21 Sensor
22 Markiergegenstand
23 Spannvorrichtung
23a, 23b Spannfeder
24 Stopper
25 Anschlag
26 Antriebszylinder
27 Initiator
28 Lichtschranke
29 Verzahnungselement
30 Kreisumfang
31 Führungselemente, z.B.Rollen, Stifte
32 Mulde
33 Ketten-Antriebsrad
34 Förderkette
35 Kettenritzel
36 Achse
37 Lager
38 Achsträger
39 Werkstückträger
40 Bremsvorrichtung
41 Eingriffselement

## Patentansprüche

1. Vorrichtung zum Fördern von Werkstücken auf Werkstückträgern (13) mit mindestens einer endlos geschlossenen umlaufenden Förderkette (2), die wenigstens einen im wesentlichen linearen und wenigstens einen gekrümmten Abschnitt aufweist,
wobei die Werkstückträger (13) in den im wesentlichen linearen Abschnitten im Reibschluss mit und durch die umlaufende Förderkette (2) angetrieben sind, und
wobei die Werkstückträger (13) in den gekrümmten Abschnitten durch eine Mitnahmescheibe (9) in Formschluss mit dieser angetrieben sind,
**dadurch gekennzeichnet,**
**dass** die Werkstückträger (13) mittels an diesen gelagerten Umlauf-Führungsrollen (12a, 6201) in einer Umlaufschiene (12b) in einer Zwangsführung geführt sind,
wobei diese die Werkstückträger (13) im Bereich des Übergangs von einem im wesentlichen linearen in einen gekrümmten Abschnitt dergestalt führt,
**dass** jeweils zwei an den Werkstückträgern (13) angebrachte Führungselemente in Form von in Förderrichtung hintereinander angebrachten Führungsrollen (12, 6004), in an der Mitnahmescheibe (9) an ihrem kreisförmigen Umfang im wesentlichen halbkreisförmige Zahnmulden (10), die zwischen in Umfangsrichtung ausgebildeten Zähnen (17, 18) nach Art eines Kettenrades ausgebildet sind, im Bereich des Übergangs einlaufen,
wobei wenigstens die vorlaufende Zahnflanke (15) der dem ersten Führungselement zugeordneten Zahnmulde (10) flacher ausgebildet ist als die nachlaufende Zahnflanke (16).

2. Vorrichtung nach Anspruch 1, **dadurch gekennzeichnet,**
**dass** eine Steuereinrichtung vorgesehen ist, die beim In-Eingriff-Bringen dieses formschlüssigen Antriebs die Bewegung des Werkstückträgers zur vorgegebenen Drehbewegung der Mitnahmescheibe derart synchronisiert, dass ein Eingriff des Führungselementes (Führungsrolle (12, 6004)), in die jeweilige Zahnmulde zwischen zwei benachbarten Zahnflanken (15, 16) kollisionsfrei bewirkt wird.

3. Vorrichtung nach Anspruch 1 oder 2, **dadurch gekennzeichnet, dass** die für den Vortrieb der Werkstückträger (13) erforderliche Zugkraft durch die Förderkette (2) auf ein mit ihr in Eingriff befindliches formschlüssiges Element (7), insbesondere ein Kettenritzel, aufgebracht wird, das seinerseits im Werkstückträger drehbar gelagert angeordnet ist, und dessen Drehbewegung durch eine mit dem Werkstückträger fest verbundene Bremse (40) gebremst wird oder durch eine schaltbare formschlüssige Kupplung, deren eine Seite mit dem Werkstückträger (13) drehfest verbunden ist, abwechselnd freigegeben oder blockiert wird.

4. Vorrichtung nach Anspruch 3, **dadurch gekennzeichnet, dass** die Bremse eine einstellbare oder nicht einstellbare Lamellenbremse, vorzugsweise eine nasslaufende Lamellenbremse ist.

5. Vorrichtung nach Anspruch 3, **dadurch gekennzeichnet, dass** die Kupplung eine Klauenkupplung ist.

6. Vorrichtung nach einem der Ansprüche 1 bis 5, **dadurch gekennzeichnet, dass** dem an der Vorrichtung angebrachten Umlenkrad der Förderkette (2) eine mit gleicher oder proportionaler Drehzahl rotierende Mitnahmevorrichtung in Form einer Mitnahmescheibe (9) zugeordnet ist, deren kreisförmiger Umfang im wesentlichen halbkreisförmige Zahnmulden (10) nach Art eines Kettenrades aufweist, in die an den Werkstückträgern angebrachte Mitnahmeelemente (12) einlaufen.

7. Vorrichtung nach einem der Ansprüche 1 bis 6, **dadurch gekennzeichnet, dass** ein kollisionsfreier Übergang von Reibschluss in Formschluss dadurch sicher gestellt ist, dass der Werkstückträger (13) am letzten Stopper (24) vor dem Eintritt in den Formschluss mittels einer Steuervorrichtung in Abhängigkeit von der augenblicklichen Winkelstellung der rotierenden Mitnahmescheibe (9) freigegeben wird.

8. Vorrichtung nach einem der Ansprüche 1 bis 7, **dadurch gekennzeichnet, dass** ein Sensor (21) auf einer Sensorscheibe (19) die Winkelposition einer Markierung (22) auf der Mitnahmescheibe (9) abtastet, und dass das Deaktivieren des jeweiligen Stoppers so erfolgt, dass der Werkstückträger (13) in der korrekten Position in die Mitnahmescheibe (9) einläuft.

9. Vorrichtung nach einem der Ansprüche 6 bis 8, **dadurch gekennzeichnet, dass** Mitnahmescheibe (9) und Umlenkrad (4, 5) des Förderers drehfest miteinander verbunden sind.

10. Vorrichtung nach einem der Ansprüche 6 bis 10, **dadurch gekennzeichnet, dass** Mitnahmescheibe (9) und Umlenkrad (4, 5) des Förderers auf unterschiedlichen Wellen angeordnet sind und mit gleicher bzw. proportionaler Drehzahl zueinander umlaufen.

11. Vorrichtung nach Anspruch 10, **dadurch gekennzeichnet, dass** die Mitnahmescheibe (9) und die die Mitnahmescheibe tragenden Wellen konzentrisch oder parallel zueinander angeordnet sind.

12. Vorrichtung nach einem der Ansprüche 1 bis 11, **dadurch gekennzeichnet, dass** eine Spannvorrichtung (23) das Umlenk-Kettenrad (4) unter Vorspannung hält, und dass das Antriebsrad (5) ortsfest gehalten ist.

13. Vorrichtung nach Ansprüchen 1, 8 und 12, **dadurch gekennzeichnet, dass** ein Seil (19a) gleitungsfrei auf dem dem Teilkreis des Umlenkrades (4) zumindest näherungsweise gleichen Außendurchmesser der Sensorscheibe (19) angebracht ist,
wobei das eine Seilende mit dem Rahmengestell (1) fest verbunden ist und das andere Seilende in geeigneter Weise, z.B. federnd, gegenhält und somit bei Änderung des Abstands zwischen der Achse des Umlenkrades (4) und dem letzten Stopper vor dem Einlauf der Werkstückträger in eben diese Umlenkung eine entsprechende Verdrehung der Sensorscheibe (19) bewirkt, was auch bei Veränderung des Abstands zwischen Stopper und Umlenkung durch Phasenverschiebung des die Deaktivierung des Stoppers auslösenden Signals korrekten Eingriff des Werkstückträgers (13) mit seinen Mitnahmeelementen (12) in die Mitnahmescheibe (9) sicherstellt.

14. Vorrichtung nach einem der Ansprüche 1 bis 6, **dadurch gekennzeichnet, dass** der Werkstückträger (13) mit Führungselementen versehen ist, die zylindrisch ausgebildet und konzentrisch zu der vorderen und der hinteren Laufachse angeordnet sind.

## Claims

1. Device for conveying workpieces on workpiece carriers (13) with at least one circulating closed-end conveyor chain (2) which disposes of at least one linear segment on the whole and at least one bended segment,
the workpiece carriers (13) being driven by mechanical friction engagement with and by the circulating conveyor chain (2) at the linear segments on the whole, and the workpiece carriers (13) being driven by a driving plate (9) in positive mechanical engagement with it at the bended segments,
**characterised in that** the workpiece carriers (13) are guided by means of circulating guide rolls (12a, 6201) which are attached to the carriers in a circulating rail (12b) in compulsory guiding, and in doing so the circulating rail guides the workpiece carriers (13) in the region of change-over from a mostly linear segment to a bended segment in such a way
that two guiding elements each which are attached to the workpiece carriers (13) in the form of guide rolls (12, 6004) being installed one behind the other in direction of flow, arrive at the region of change-over in mostly semi-circular tooth hoppers (10) at the driving plate (9) in its circular circumference, - tooth hoppers which are designed in form of a chain wheel between teeth (17, 18) arranged in circumferential direction, and so at least the leading tooth flank (15) of the tooth hopper (10) belonging to the first guiding element is shaped flatter than the subsequent tooth flank (16).

2. Device according to Claim 1, **characterised in that** a controller is provided which on engaging the positive mechanical drive, synchronises the motion of the workpiece carriers in relation to the preset rotary motion of the driving plate in such a way, that an engagement of the guiding element (guide roll (12, 6004)) in the correspondent tooth hopper between two adjacent tooth flanks (15, 16) can be carried out without any collision risk.

3. Device according to Claim 1 or 2, **characterised in that** the tractive power which is necessary for the propulsion of the workpiece carriers (13) is applied by the conveyor chain (2) onto an element (7) engaging positively together with the chain, in particular a chain sprocket which is arranged in a journalled, swivelling manner in the workpiece carrier, and the rotary motion of which is slowed down by a brake (40) strongly connected with the workpiece carrier or is alternately released or blocked by a switchable coupling in positive ways one side of which being solidly fixed to the workpiece carrier (13).

4. Device according to Claim 3, **characterised in that** the brake is an adjustable or non-adjustable multiple-disk brake, preferably a multiple-disk wet brake.

5. Device according to Claim 3, **characterised in that** the coupling is a claw clutch.

6. Device according to one of the Claims 1 to 5, **characterised in that** a carrier device rotating with equal or proportional revolutions per minute in the shape of a driving plate (9) is assigned to the drawback pulley of the conveyor chain (2), the pulley being fixed to the device, the circular circumference of the carrier device disposes of mostly semi-circular tooth hoppers (10) like a chain wheel, where the guiding elements (12) which are attached on the workpiece carriers, enter in.

7. Device according to one of the Claims 1 to 6, **characterised in that** a collision-free change-over from mechanical friction engagement to positive mechanical engagement is ensured in such a way, that the workpiece carrier (13) is released at the last stopper (24) before entering into the positive mechanical engagement by means of a control device against the current angularity of the rotating driving plate (9).

8. Device according to one of the Claims 1 to 7, **characterised in that** a sensor (21) on a sensor plate (19) gauges the angle position of the marking (22) on the driving plate (9), and that the corresponding stopper is deactivated in the way that the workpiece carrier (13) enters into the driving plate (9) in correct position.

9. Device according to one of the Claims 6 to 8, **characterised in that** the driving plate (9) and the drawback pulley (4, 5) of the conveyor are connected torque-proofly.

10. Device according to one of the Claims 6 to 10, **characterised in that** the driving plate (9) and the drawback pulley (4, 5) of the conveyor are arranged on different shafts and rotate to each other with equal or proportional revolutions per minute.

11. Device according to Claim 10, **characterised in that** the driving plate (9) and the shafts holding the driving plate are arranged to each other in a concentric or parallel way.

12. Device according to one of the Claims 1 to 11, **characterised in that** the tension device (23) keeps the drawback pulley (4) prestressed, and that the drive pulley (5) is kept non-portable.

13. Device according to the Claims 1, 8 and 12, **characterised in that** a freely sliding cable (19a) is attached to the outside diameter of the sensor plate (19) which is at least approximately equal to the pitch circle of the drawback pulley (4), whereas the one cable end is solidly combined with the frame housing (1) and the other cable end operates in a suitable way counter-acting, for example resilient. So, when changing the distance between the axle of the drawback pulley (4) and the last stopper a corresponding roll of the sensor plate (19) is achieved before the workpiece carrier enters into this track curve, which also ensures a correct mesh of workpiece carrier (13) with its driving elements (12) in the driving plate (9), when the distance between the stopper and the track curve is changed by phase adjustment of the signal releasing the deactivation of the stopper.

14. Device according to one of the Claims 1 to 6, **characterised in that** the workpiece carrier (13) is provided with guiding elements which are cylindrical-shaped and arranged in concentric order to the front and back carrying axle.

## Revendications

1. Dispositif pour convoyer des pièces d'oeuvre aux supports de pièce (13), au moins muni d'une chaîne convoyante, circulante en continu (2), laquelle au moins dispose d'une section linéaire en substance ainsi que d'une section courbée,
les supports de pièce (13) étant actionnés en liaison mécanique de frottement avec et par la chaîne convoyante circulante (2) dans les, sections substantiellement linéaires , et les supports de pièce (13) dans les sections courbées étant actionnés par une disque d'entraînement (9) en liaison mécanique positive avec celle-ci,
**caractérisé** du fait
qu'au moyen des guides circulants (12a, 6201) montés aux supports de pièce (13) ceux-ci soient guidés dans une glissière circulaire (12b) en guidance serré, cette glissière guidant les supports de pièce (13) dans la zone transitoire d'une section substantiellement linéaire à section courbée tellement,
que deux de chaque éléments de guidage montés aux supports de pièce (13) sous forme de guides circulants (12, 6004) fixés l'un derrière l'autre dans le sens de marche, arrivent à la disque d'entraînement (9) à sa contour circulaire ayant des trémies de dent (10) hémisphérique en substance, lesquelles sont formées entre des dents arrangés en direction de contour (17, 18) de la manière d'une roue à chaîne, à la zone transitoire,
cependant qu'au moins le flanc de dent passant en devant (15) de la trémie de dent appartenante au premier élément de guidage (10) se présente plus plat que le flanc de dent suivant (16).

2. Dispositif selon revendication 1, **caractérisé** du fait
qu'un dispositif de commande est prévu, lequel synchronise lors de la mise en service de cet actionneur à treuil attelé le mouvement du support de pièce en relation au mouvement rotatif imparti de la disque d'entraînement de cette façon qu'un engrènement de l'élément de guidage (guide circulant (12, 6004)) dans la trémie de dent correspondante entre deux flancs de dent avoisinants (15, 16) puisse se faire sans aucune collision.

3. Dispositif selon revendication 1 ou 2, **caractérisé** du fait
que la force de traction laquelle est nécessaire pour les pousses des supports de pièce (13) par la chaîne convoyante (2) est mise sur un élément à treuil attelé opérant ensemble avec la chaîne (7), en particulier un pignon de chaîne, celui-ci étant arrangé au support de pièce à dépôt rotatif et le mouvement rotatif duquel est freiné par un frein solidement raccordé au support de pièce (40) ou le mouvement rotatif duquel est débloqué ou bloqué alternativement par un accouplement embrayable à treuil attelé, dont une coté est fixée au support de pièce d'une manière non-rotatif.

4. Dispositif selon revendication 3, **caractérisé** du fait
que le frein est d'un type de frein à disques multiples, réglable ou non-réglable, en préférence un frein à disques multiples opérant sous humidité.

5. Dispositif selon revendication 3, **caractérisé** du fait
que l'accouplement est un embrayage à clabote.

6. Dispositif selon quelconque des revendications 1 à 5, **caractérisé** du fait
que la poupée de renvoi de la chaîne convoyante (2) fixée au dispositif est munie d'un dispositif d'entraînement tournant à une vitesse de rotation égale ou proportionnelle en forme d'une disque d'entraînement (9), sa contour circulaire présentant en substance des trémies de dent (10) hémisphériques du type d'une roue à chaîne, dans lesquelles les éléments de guidage (12) fixés aux supports de pièce s'engrènent.

7. Dispositif selon quelconque des revendications 1 à 6, **caractérisé** du fait
qu'une transition de la liaison mécanique de frottement vers la liaison mécanique positive est assurée sans aucune collision par ce que le support de pièce (13) est débloqué au poussoir final (24) avant son entrée dans la liaison mécanique positive au moyen d'un dispositif de réglage en dépendance de la position actuelle de cornière de la disque tournante d'entraînement (9).

8. Dispositif selon quelconque des revendications 1 à 7, **caractérisé** du fait qu'un capteur (21) sur une disque de capteur (19) sonde la position de cornière par un marquage sur la disque d'entraînement (9) et que le capteur correspondant est désactivé de la manière que le support de pièce (13) entre dans la disque d'entraînement (9) à la position correcte.

9. Dispositif selon quelconque des revendications 6 à 8, **caractérisé** du fait que la disque d'entraînement (9) et la poupée de renvoi (4, 5) du convoyeur sont calées d'une façon constante.

10. Dispositif selon quelconque des revendications 6 à 10, **caractérisé** du fait que la disque d'entraînement (9) et la poupée de renvoi (4, 5) du convoyeur sont arrangées aux arbres différentes et qu'elles circulent à une vitesse de rotation égale ou proportionnelle l'une à l'autre.

11. Dispositif selon revendication 10, **caractérisé** du fait que la disque d'entraînement (9) et les arbres portant la disque d'entraînement sont arrangées l'une à l'autre d'une manière annulaire ou parallèle.

12. Dispositif selon quelconque des revendications 1 à 11, **caractérisé** du fait qu'un dispositif de serrage (23) maintient la poupée de renvoi (4) en précontrainte, et que la roue motrice est tenu sur place.

13. Dispositif selon revendications 1, 8 et 12, **caractérisé** du fait qu'un cordage (19a) est arrangé à glissement libre au diamètre extérieur de la disque de capteur (19), le diamètre extérieur étant du moins approximativement égal au cercle primitif de la poupée de renvoi (4), cependant que l'un bout de cordage est solidement relié avec le bâti à portique (1) et l'autre bout de cordage agissant dans une manière propre à contraire, p. ex. élastique et par conséquent lors d'un changement de la distance entre l'arbre de la poupée de renvoi (4) et le poussoir final avant l'entrée des supports de pièce juste à ce renversement un roulis correspondant de la disque de capteur (19) est produit, assurant de même un engrènement correct du support de pièce (13) avec ses élément de guidage dans la disque d'entraînement (9) lors d'un changement de la distance entre le poussoir final et le renversement par déplacement de phase au signal lequel déclenche la désactivation du poussoir.

14. Dispositif selon quelconque des revendications 1 à 6, **caractérisé** du fait que le support de pièce (13) est muni des éléments de guidage d'une forme cylindrique, lesquels sont arrangés de façon annulaire à l'arbre porteur avant et derrière.
